(19) Europäisches Patentamt
European Patent Office
Office européen des brevets

(11) **EP 3 121 616 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(21) Anmeldenummer: **15177906.3**

(22) Anmeldetag: **22.07.2015**

(51) Int Cl.:
**G01S 3/58** (2006.01)

(54) **ORTUNGSVORRICHTUNG UND ORTUNGSVERFAHREN**

POSITIONING DEVICE AND POSITIONING METHOD

DISPOSITIF DE LOCALISATION ET PROCEDE DE LOCALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.01.2017 Patentblatt 2017/04**

(73) Patentinhaber: **Rohde & Schwarz GmbH & Co. KG**
**81671 München (DE)**

(72) Erfinder: **WIEMER, Dr. Ingo**
**85241 Herbertshausen (DE)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(56) Entgegenhaltungen:
**DE-A1- 1 766 027      GB-A- 2 101 829**
**JP-A- S5 728 270      US-A- 4 303 922**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Ortungsvorrichtung zur Ortung einer Quelle eines Funksignals und ein entsprechendes Ortungsverfahren.

Technisches Gebiet

Systeme zur Ortung von Funksignalen werden heute in einer Vielzahl von Anwendung eingesetzt, um die Quellen bestimmter Funksignale orten zu können.
Beispielsweise kann es das Ziel sein, basierend auf von Radarsystemen ausgesendeten Funksignalen die Position des jeweiligen Radarsystems zu bestimmen.
Neben der Bestimmung der Entfernung zu der Quelle des jeweiligen Funksignals spielt die Bestimmung der Richtung, in welcher die Quelle liegt, eine entscheidende Rolle.
Beispielsweise kann die Richtung, in welcher sich eine Quelle eines Funksignals befindet, mit Hilfe einer Peilantenne und eines Interferometer-Peilers bestimmt werden.
Eine weitere Möglichkeit zur Richtungsbestimmung besteht darin, eine drehbare Richtungsantenne zu nutzen. Dabei wird die drehbare Antenne in diejenige Richtung gedreht, in welcher am Empfänger der höchste Pegel anliegt. Dies schlägt allerdings fehl, wenn das empfangene Signal Pegelschwankungen aufweist. Um dies zu kompensieren kann eine zweite ungerichtete Antenne genutzt werden, um aus einem Vergleich der zwei Empfangssignale die Richtung zu bestimmen. Die Empfangsrichtung ist dann diejenige Richtung, in welcher an der drehbaren Richtungsantenne ein größerer Pegel anliegt, als an der ungerichteten Antenne.
Solche Systeme zur Richtungsbestimmung bei Funksignalen sind aber aufwändig in Ihrer Konstruktion und erfordern eine Vielzahl einzelner Komponenten.
Die Druckschrift GB 2 101 829 A offenbart ein Orientierungssystem, bei welchem basierend auf einer Barke, die ein konstantes Signal in alle Richtungen ausstrahlt, und auf einer sich drehenden Empfangsantenne eine Orientierung eines Körpers gegenüber einem zweiten Körper bestimmt wird.

Offenbarung der Erfindung

Es ist daher eine Aufgabe der vorliegenden Erfindung eine einfache Möglichkeit zur Sender-Ortung bereitzustellen.
Die vorliegende Erfindung offenbart eine Ortungsvorrichtung mit den Merkmalen das Patentanspruchs 1 und ein entsprechendes Verfahren mit den Merkmalen des Patentanspruchs 6.

Darstellung der Erfindung

Die der vorliegenden Erfindung zu Grunde liegende Erkenntnis besteht darin, dass es auch ohne eine zweite Antenne möglich ist, die Richtung, aus welcher ein Funksignal empfangen wird, zu bestimmen.
Die Erfindung nutzt dafür ein bekanntes Bewegungsmuster der Empfangsantenne mit einem entsprechenden an das Bewegungsmuster angepassten Referenzsignal. Zur Ausführung des Bewegungsmusters kann die Empfangsantenne z.B. mit einem entsprechenden Antrieb gekoppelt sein. Um die Richtung zu bestimmen, aus welcher das Funksignal auf die Empfangsantenne trifft, kann die Empfangsantenne z.B. zyklisch eine 360° Drehung um eine Hochachse ausführen. Die Empfangsantenne tastet ihre Umgebung dabei also zyklisch kreisförmig ab. Dabei kann die Drehgeschwindigkeit bzw. die Winkelgeschwindigkeit konstant sein. Die Empfangsantenne kann aber auch komplexe Bewegungsmuster, wie z.B. Schwenkbewegung in einem vorgegebenen Winkelbereich oder dreidimensionale Bewegungen in drei Raumachsen, ausführen.
Das Referenzsignal bildet ein theoretisches Empfangssignal der Empfangsantenne nach, welches diese ausgeben würde, wenn sie mit einem Standardsignal konstanten Pegels aus einer konstanten, also unveränderlichen, Senderichtung beaufschlagt würde. Dabei kann das Referenzsignal experimentell für eine Empfangsantenne bestimmt werden oder vor Inbetriebnahme der Ortungsvorrichtung z.B. durch Modellbildung und Simulation berechnet werden. Da die Empfangsantenne eine Richtwirkung aufweist, weist das Referenzsignal für diejenige Richtung der Antenne ein Maximum auf, in welcher die Richtung maximalen Antennengewinns mit der Empfangsrichtung des Referenzsignals übereinstimmt.
Wird nun ein reales Funksignal von der in Bewegung befindlichen Empfangsantenne empfangen, weist dieses ebenfalls ein Maximum für diejenige Richtung auf, in welcher die Richtung maximalen Antennengewinns mit der Empfangsrichtung des realen Funksignals übereinstimmt.
Durch eine Korrelation kann die Abweichung der Richtung des Maximums des Referenzsignals von der Richtung des Maximums des empfangenen Funksignals berechnet werden. Da die Richtung bekannt ist, aus welcher das Referenzsignal empfangen wurde, kann folglich auch die Richtung bestimmt werden, aus welcher das empfangene Funksignal empfangen wurde.
Eine Ortung der Quelle des empfangenen Funksignals ist folglich auf sehr einfache Art mit lediglich einer einzigen Empfangsantenne möglich.
Vorteilhafte Ausführungsformen und Weiterbildungen ergeben sich aus den Unteransprüchen sowie aus der Beschreibung unter Bezugnahme auf die Figuren.
In einer Ausführungsform kann das Referenzsignal als Referenzvektor ausgebildet sein, welcher eine vorgegebene Anzahl an Werten aufweist, wobei jeder der Werte für einen Abschnitt des Bewegungsmusters den theoretischen Pegel des empfangenen Standardsignals angibt. Führt die Empfangsantenne z.B. eine kontinuierliche Drehbewegung, also eine Kreisbewegung, aus, kennzeichnet jeder Wert des Referenzvektors ein Kreissegment der Kreisbewegung. Die Winkelauflösung wird dabei durch die Anzahl der Werte des Referenzvektors bestimmt. Beispielsweise kann der Referenzvektor 3600 Werte aufweisen. Bei einer Kreisbewegung der Empfangsantenne würde dies zu einer Winkelauflösung von 0.1° führen. Jeder Wert des Referenzvektors kennzeichnet also ein Kreissegment mit einem Öffnungswinkel von 0,1°. Soll die Winkelauflösung erhöht oder verringert werden, kann ein Referenzvektor mit einer größeren oder kleineren Anzahl von Werten gewählt werden.

In einer Ausführungsform kann die Recheneinrichtung ausgebildet sein, das empfangene Funksignal in einem Empfangsvektor zu speichern, welcher die gleiche Anzahl an Werten aufweist, wie der Referenzvektor. Weisen sowohl der Referenzvektor als auch der Empfangsvektor die gleiche Anzahl, insb. eine Zweierpotenz, an Werten auf, vereinfacht dies die Korrelation. Alternativ kann die Recheneinrichtung bei Vektoren unterschiedlicher Länge eine Interpolation durchführen. Führt die Empfangsantenne nicht Dreh- oder Schwenkbewegungen in einer Ebene durch, sondern führt dreidimensionale (Schwenk-) Bewegungen durch, können statt Vektoren Matrizen oder dergleichen vorgesehen sein.

In einer Ausführungsform kann die Recheneinrichtung ausgebildet sein, für jeden Abtastzeitpunkt des empfangenen Funksignals den jeweiligen Abtastzeitpunkt durch die Dauer des Bewegungsmusters zu dividieren und den Nachkommaanteil der Division mit der Anzahl der Werte des Empfangsvektors zu multiplizieren, um die Stelle des Wertes in dem Vektor zu berechnen, welchem ein Pegel des empfangenen Signals zum jeweiligen Abtastzeitpunkt zuzuordnen ist. Die Recheneinrichtung kann ausgebildet sein, den Pegel des empfangenen Signals zum jeweiligen Abtastzeitpunkt zu dem entsprechenden Wert an der berechneten Stelle zu addieren. Vor dem Beginn einer Ortung können die Werte des Empfangsvektors z.B. mit "0" initialisiert werden. Dauert eine vollständige Drehung der Empfangsantenne z.B. 10 Sekunden, kann derjenige Wert, dem ein Empfangspegel zugeordnet werden muss, sehr einfach nach obiger Regel bestimmt werden. Dazu wird der Abtastzeitpunkt, z.B. 1s, durch 10s geteilt. Das Ergebnis von 0,1 wird mit der Anzahl der Werte des Empfangsvektors, z.B. 3600, multipliziert. Der bei 1s empfangene Signalpegel müsste folglich dem 360sten Wert des Empfangsvektors zugeordnet werden. Durch die Verwendung des Nachkommaanteils kann diese Methode auch bei einer kontinuierlichen zyklischen Bewegung der Empfangsantenne eingesetzt werden. Der Empfangsvektor stellt folglich eine Art Richtungshistogramm dar, in welchem sich die Pegelwerte des empfangenen Funksignals richtungsabhängig aufsummieren.

In einer Ausführungsform kann die Ortungsvorrichtung eine Auswerteeinrichtung aufweisen, welche ausgebildet ist, aus dem empfangenen Funksignal einen Datenstrom aus Datensätzen zu erzeugen, welche das empfangene Funksignal beschreiben, wobei jeder Datensatz zumindest den jeweiligen Signalpegel und die Richtung angibt, in welche die Empfangsantenne zum jeweiligen Abtastzeitpunkt ausgerichtet ist, wobei die Recheneinrichtung ausgebildet sein kann, den Pegel des empfangenen Signals zum jeweiligen Abtastzeitpunkt zu dem entsprechenden Wert des Empfangsvektors zu addieren, welcher der in dem Datensatz angegebenen Richtung entspricht. Die einzelnen Datensätze, auch als Pulse Descriptor Words bezeichnet, können Informationen über das zu einem jeweiligen Abtastzeitpunkt erfasste Empfangssignal bündeln und damit die Auswertung des Empfangssignals vereinfachen. Die Auswerteeinrichtung kann in der Ortungsvorrichtung insbesondere auch unabhängig von der Richtungsbestimmung vorgesehen sein, um weitergehende Signalanalysen zu ermöglichen. In solch einem Fall werden immer entsprechende Datensätze für das empfangene Funksignal erzeugt und können sozusagen als Nebenprodukt für die Vereinfachung der Richtungsbestimmung eingesetzt werden. Die Auswerteeinrichtung kann in einer Ausführungsform z.B. in der Recheneinrichtung angeordnet sein.

In einer Ausführungsform kann die Recheneinrichtung ausgebildet sein, das empfangene Funksignal und das Referenzsignal periodisch im Zeitbereich zu einem Ausgangssignal zu korrelieren.

In einer Ausführungsform kann die Recheneinrichtung ausgebildet sein, das empfangene Funksignal und das Referenzsignal jeweils in den Frequenzbereich zu transformieren, die transformierten Signale elementweise miteinander zu multiplizieren und das Ergebnis der Multiplikation als Ausgangssignal zurück in den Zeitbereich zu transformieren. Die Transformation in den Frequenzbereich ermöglicht die Korrelation des empfangenen Funksignals mit dem Referenzsignal durch eine einfache Multiplikation. Gegenüber der Berechnung der Korrelation im Zeitbereich wird diese folglich deutlich vereinfacht.

In einer Ausführungsform kann die Recheneinrichtung ausgebildet sein, die Differenz der Position des Maximums in dem Ausgangssignal und der Position des Maximums in dem Referenzsignal zu bestimmen und basierend auf der bestimmten Differenz die Position der Quelle des Funksignals zu bestimmen. Das Ausgangssignal kann z.B. als Ausgangssignalvektor mit 3600 Werten für eine 360° Drehung der Empfangsantenne vorliegen. Insbesondere kann das Referenzsignal ebenfalls als Referenzvektor mit der gleichen Anzahl von Werten vorliegen. Die Vektoren weisen folglich für eine 360° Drehung eine Winkelauflösung von 0,1° auf.

Beispielsweise kann sich das Maximum des Referenzvektors bei dem 2000. Wert, welcher z.B. einem Winkel von 200° entsprechen kann, befinden. Befindet sich nun das Maximum des Ausgangssignalvektors bei dem 900. Wert, kann die Position bzw. der Winkel der Quelle des Funksignals berechnet werden, indem der Winkel von 0,1°*(2000-900) = 110° von 200° abgezogen wird, also 200° - 110° = 90°.

Der Referenvektor kann insbesondere so geformt sein, dass sich sein Maximum ebenfalls bei 0° Drehwinkel der Empfangsantenne befindet. Es ist zur Positionsbestimmung nun lediglich die Kenntnis des Zeitpunkts nötig, zu welchem die Empfangsantenne einen Drehwinkel von 0° aufweist. Dies kann z.B. zu einem Zeitpunkt t=0 der Fall sein. In solch einem Fall kennzeichnet der erste Wert des Ausgangssignalvektors den Winkel von 0° und jeder weitere Wert z.B. jeweils einen zusätzlichen Winkel von 0.1°. Die Recheneinrichtung kann zur Bestimmung der Position folglich lediglich die Ordnungszahl desjenigen Wertes, an welchem der Ausgangssignalvektor ein Maximum aufweist, mit der Winkelauflösung des Ausgangssignalvektors, also z.B. 0,1°, multiplizieren. Befindet sich das Maximum des Ausgangssignalvektors z.B. an dem 260. Wert, befindet sich für das obige Beispiel die Quelle des Funksignals ausgehend von dem 0° Winkel der Empfangsantenne bei einem Winkel von 260*0,1° = 26°.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:

Fig. 1 ein Blockschaltbild einer Ausführungsform einer erfindungsgemäßen Ortungsvorrichtung;

Fig. 2 ein Ablaufdiagramm einer Ausführungsform eines erfindungsgemäßen Verfahrens;

Fig. 3 ein Blockschaltbild einer Ausführungsform einer erfindungsgemäßen Ortungsvorrichtung;

Fig. 4 eine schematische Darstellung eines erfindungsgemäßen Referenzsignals; und

Fig. 5 eine schematische Darstellung eines Ausgangssignals gemäß der vorliegenden Erfindung.

In allen Figuren sind gleiche bzw. funktionsgleiche Elemente und Vorrichtungen - sofern nichts Anderes angegeben ist - mit denselben Bezugszeichen versehen worden.

Ausführungsformen der Erfindung

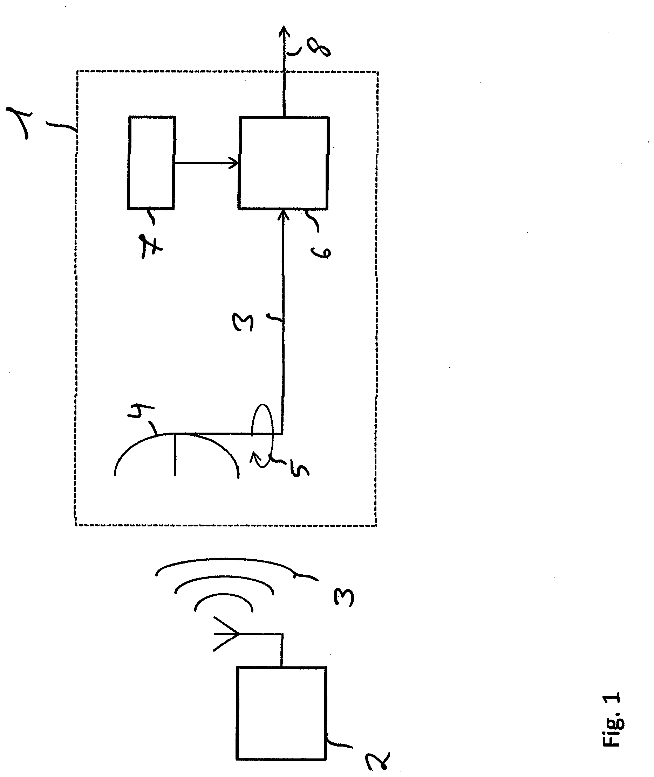

Fig. 1 zeigt ein Blockschaltbild einer Ausführungsform einer erfindungsgemäßen Ortungsvorrichtung 1, welche dazu dient, den Empfangswinkel für ein Funksignal 3 an der Empfangsantenne 4 zu bestimmen. Durch den Empfangswinkel bzw. die Richtung 8, aus welcher das Funksignal 3 empfangen wird, kann die Quelle 2 des Funksignals 3 geortet werden.

Die Ortungsvorrichtung 1 nutzt dazu die Empfangsantenne 4, die drehbeweglich gelagert ist und eine kontinuierliche Kreisbewegung 5 ausführt. Die Empfangsantenne 4 dreht sich also mit konstanter Geschwindigkeit um ihre Hochachse. Die Kreisbewegung 5 um die Hochachse ist lediglich als ein beispielhaftes Bewegungsmuster für die Empfangsantenne 4 anzusehen. Es versteht sich, dass das Prinzip der vorliegenden Erfindung auf beliebige weitere Bewegungsmuster anwendbar ist. Beispielsweise kann die Empfangsantenne 4 auch eine Schwenkbewegung um einen vorgegebenen Winkel, z.B. +/- 15° oder dergleichen ausführen. Ferner kann die Empfangsantenne 4 auch eine dreidimensionale Bewegung ausführen. D.h. dass die Empfangsantenne 4 nicht nur eine Dreh- oder Schwenkbewegung in einer z.B. horizontalen Ebene ausführt, sondern zusätzlich in vertikaler Richtung bewegt bzw. geschwenkt wird.

Die Empfangsantenne 4 leitet das empfangene Funksignal 3 an die Recheneinrichtung 6 weiter, welche das empfangene Funksignal 3 gemeinsam mit einem Referenzsignal 7 auswertet.

Die Recheneinrichtung 4 kann das empfangene Funksignal 3 z.B. abtasten und in einen Empfangsvektor wandeln, der für jeden Abtastzeitpunkt einen Wert aufweist. Dabei kann die Anzahl der Abtastzeitpunkte und damit der Werte des Empfangsvektors an das Bewegungsmuster 5 der Empfangsantenne 4 angepasst sein.

Dreht sich die Empfangsantenne 4, wie bereits erläutert, kontinuierlich mit konstanter Winkelgeschwindigkeit im Kreis, können z.B. 3600 Abtastzeitpunkte für jeweils eine volle Umdrehung der Empfangsantenne 4 vorgesehen werden. Die Ordinalzahlen der Abtastzeitpunkte liegen folglich zwischen 0 und 3599. Jeder Wert des Empfangsvektors repräsentiert folglich einen Winkelbereich von 0,1° des vollständigen Kreises, den die Empfangsantenne 4 bei einer Umdrehung abtastet. Diese Anzahl der Abtastzeitpunkte ist lediglich als beispielhaft zu verstehen und kann je nach Anwendung erhöht oder verringert werden.

Das Referenzsignal 7 ist ebenfalls an das Bewegungsmuster 5 angepasst bzw. es weist ein Referenzvektor die gleiche Anzahl an Werten auf, wie der Empfangsvektor.

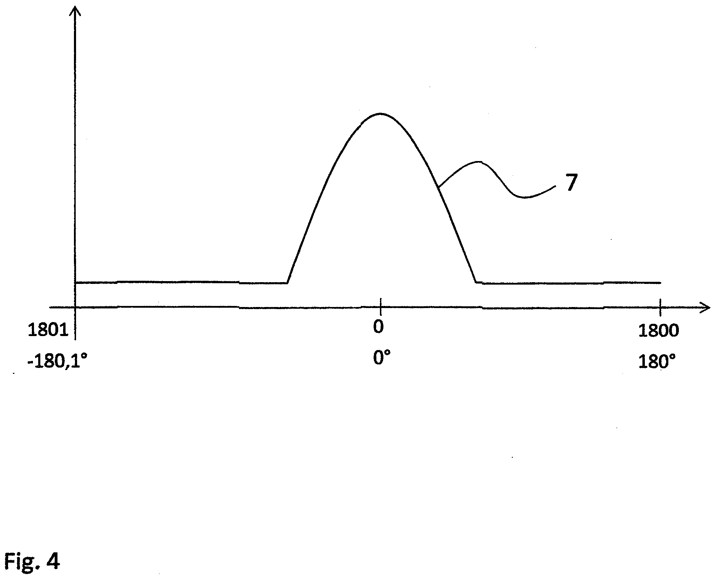

Dem Referenzsignal 7 kommt bei der Auswertung des empfangen Funksignals 3 eine besondere Bedeutung zu, da dieses eine Art Referenzmarkierung bzw. Referenzwinkel für die verwendete Empfangsantenne 4 darstellt. Dazu ist das Referenzsignal 7 ausgebildet, wie ein spezielles theoretisches Signal, welches durch die Empfangsantenne 4 empfangen wird. Dieses spezielle theoretische Signal weist einen konstanten Signalpegel auf und wird von der Empfangsantenne 4 aus einer bekannten, vorgegebenen Richtung über einen gesamten Bewegungszyklus des Bewegungsmusters 5 empfangen. Ein beispielhaftes Referenzsignal 7 ist in Fig. 4 dargestellt.

Die Recheneinrichtung 6 korreliert nun das Referenzsignal 7 mit dem empfangenen Funksignal 3 und berechnet basierend auf der Korrelation die Richtung 8 bzw. den Winkel aus welchem das Funksignal 3 zu der Empfangsantenne 4 übertragen wird. Durch die Korrelation entsteht ein Ausgangssignal, welches ein Maximum an derjenigen Stelle aufweist, die die Richtung kennzeichnet, aus welcher das Funksignal 3 zu der Empfangsantenne 4 übertragen wird. Werden, wie oben bereits beschrieben, Vektoren für die Darstellung der Signale 3, 7 genutzt, kennzeichnet jeder Abtastzeitpunkt bzw. jeder Wert des Ausgangssignals bzw. -Vektors ebenfalls einen entsprechenden Winkelbereich des Bereichs um die Empfangsantenne 4.

Wenn das Referenzsignal sein Maximum bei einem Winkel von 0° aufweist, kann die Recheneinrichtung 6 die Richtung also einfach durch eine Multiplikation der Ordinalzahl des entsprechenden Abtastzeitpunkts bzw. Wertes des Ausgangssignals bzw. -Vektors mit der entsprechenden Winkelauflösung, hier 0,1°, berechnen.

Weist das Referenzsignal sein Maximum bei einem anderen Winkel als 0° auf, muss die Recheneinrichtung das Maximum entsprechend verschieben, indem sie vor der Multiplikation der Ordinalzahl des entsprechenden Abtastzeitpunkts bzw. Wertes die Ordinalzahl des Abtastzeitpunkts abzieht, an welchem das Referenzsignal 7 sein Maximum hat.

Die Recheneinrichtung 6 kann in einer Ausführungsform als eigenständige Komponente der Ortungsvorrichtung 1 ausgebildet sein. Die Recheneinrichtung kann auch als eigenständige Komponente z.B. eines Radarsystems oder dergleichen ausgebildet sein, welches um die Ortungsvorrichtung 1 ergänzt wird. Alternativ kann die Rechenvorrichtung 1 aber auch als Hardwareoder Programmmodul ausgebildet sein, welches z.B. in einer bereits in einem Radarsystem vorhandenen Steuereinrichtung ausgeführt wird.

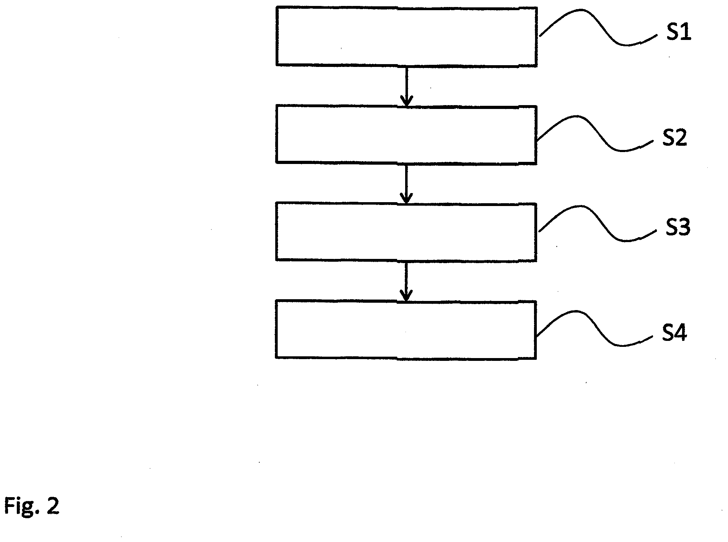

Fig. 2 zeigt ein Ablaufdiagramm einer Ausführungsform eines erfindungsgemäßen Verfahrens zum Orten einer Quelle 2 eines Funksignals 3. Auch wenn im Folgenden die Schritte des Verfahrens mit Ordinalzahlen, wie erster, zweiter usw., versehen sind, kennzeichnen diese Ordinalzahlen nicht zwingend eine Reihenfolge. Es versteht sich, dass einzelne Schritte in einer anderen, als der hier angegebenen Reihenfolge oder parallel zueinander ausgeführt werden können. Insbesondere kann ein zweiter Durchlauf des Verfahrens z.B. bereits begonnen werden, während der erste Durchlauf noch nicht beendet ist. Es werden also nacheinander stattfindende Schritte des Verfahrens mit unterschiedlichen Eingangswerten parallel zueinander ausgeführt.

In einem ersten Schritt S1 ist vorgesehen, ein vorgegebenes Bewegungsmusters 5 mit einer beweglich gelagerten Empfangsantenne 4 auszuführen. Die Empfangsantenne 4 kann also z.B. eine kontinuierliche Kreisbewegung, vorgegebene Schwenkbewegungen oder andere komplexe Bewegungsmuster ausführen. Das Verfahren sieht ferner das Empfangen S2 des Funksignals 3 mit der beweglich gelagerten Empfangsantenne 4 vor, während diese das Bewegungsmuster 5 ausführt. Folglich werden die Schritte S1 und S2 insbesondere parallel zueinander ausgeführt.

Zur Auswertung des Funksignals 3 wird das empfangene Funksignal 3 mit einem vorgegebenen Referenzsignal 7 korreliert. Basierend auf einem Maximum des Korrelationsergebnisses wird in Schritt S4 die Richtung 8, 22 bestimmt, aus welcher das Funksignal 3 auf die Empfangsantenne 4 trifft. Das Referenzsignal 7 ist dabei ein von der bewegten Empfangsantenne 4 empfangenes Standardsignal mit konstantem Signalpegel, welches auf die Empfangsantenne 4 aus einer unveränderlichen vorgegebenen Senderichtung trifft.

Zur einfacheren Auswertung bzw. Berechnung, der Richtung aus welcher das empfangene Funksignal 3 die Empfangsantenne 4 trifft, kann das Referenzsignal 7 als Referenzvektor ausgebildet sein, welcher eine vorgegebene Anzahl an Werten aufweist. Auch das empfangene Funksignal 3 kann in einem Empfangsvektor gespeichert werden, welcher die gleiche Anzahl an Werten aufweist, wie der Referenzvektor. Jeder der Werte der zwei Vektoren steht dabei für einen zeitlichen und damit auch für einen örtlichen Abschnitt des Bewegungsmusters 5. Beispielsweise kann der erste Wert jeweils für einen Winkel von 0° bzw. einen Abtastzeitpunkt von 0s stehen. Jeder weitere Wert kann dann für einen zusätzlichen Winkel von z.B. 0,1° bzw. einen zusätzlichen Abtastzeitraum stehen. Dreht sich die Empfangsantenne 4 z.B. in 12s um 360°, steht jeder Wert bei einer Winkelauflösung von 0,1° für einen Zeitraum von 0,2s.

Um zu bestimmen, welchem Wert des Empfangsvektors ein jeweils abgetasteter Wert zugeordnet werden muss, kann für jeden Abtastzeitpunkt des empfangenen Funksignals 3 der jeweilige Abtastzeitpunkt durch die Dauer des Bewegungsmusters 5 dividiert werden und der Nachkommaanteil der Division mit der Anzahl der Werte des Empfangsvektors multipliziert werden, um die Stelle des Wertes in dem Vektor zu berechnen, welchem ein Pegel des empfangenen Funksignals 3 zum jeweiligen Abtastzeitpunkt zuzuordnen ist. Diese Vorschrift kann als folgende Formel dargestellt werden:

$$n = N * \text{mod}(t_a/T_s, \ 1)$$

wobei n für die Ordinalzahl des Wertes in dem Empfangsvektor steht, N für die Gesamtzahl der Werte in dem Empfangsvektor, mod(*, 1) für die Modulfunktion Modulo 1. Diese dient dazu, den Nachkommaanteil der Division von

$t_a$ durch $T_s$ zu berechnen. $t_a$ steht für den Abtastzeitpunkt und $T_s$ für die Gesamtdauer des Bewegungszyklus. Der Pegel des empfangenen Signals zum jeweiligen Abtastzeitpunkt wird dann zu dem entsprechenden Wert in dem Ausgangvektor an der berechneten Stelle addiert.

Alternativ kann aus dem empfangenen Funksignal 3 ein Datenstrom aus Datensätzen 13-1 bis 13-n erzeugt werden, welche das empfangene Funksignal 3 beschreiben. Jeder Datensatz 13-1 bis 13-n kennzeichnet zumindest den jeweiligen Signalpegel und die Richtung, in welche die Empfangsantenne 4 zum jeweiligen Abtastzeitpunkt ausgerichtet ist. Der Pegel des empfangenen Funksignals 3 zum jeweiligen Abtastzeitpunkt wird dann zu dem entsprechenden Wert des Empfangsvektors addiert, welcher der in dem Datensatz 13-1 bis 13-n angegebenen Richtung entspricht.

Die Korrelation des empfangenen Funksignals 3 und des Referenzsignals 7 kann periodisch im Zeitbereich durchgeführt werden. Alternativ kann die Korrelation auch im Frequenzbereich durchgeführt werden. Dazu werden das empfangene Funksignal 3 und das Referenzsignal 7 jeweils in den Frequenzbereich transformiert, die transformierten Signale elementweise miteinander multipliziert und das Ergebnis der Multiplikation als Ausgangssignal 30 zurück in den Zeitbereich transformiert.

Schließlich kann die Differenz der Position des Maximums in dem Ausgangssignal 30, bzw. einem Ausgangsvektor mit der gleichen Anzahl an Werten, wie der Referenzvektor, und der Position des Maximums in dem Referenzsignal 7, bzw. dem Referenzvektor, bestimmt werden und basierend auf der bestimmten Differenz die Position der Quelle 2 des Funksignals 3 bestimmt werden.

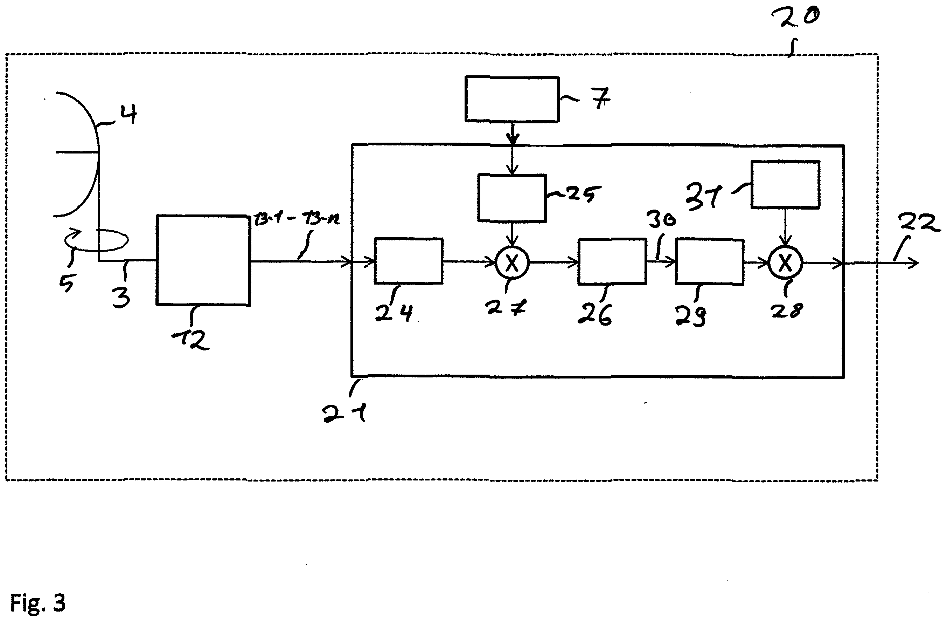

Fig. 3 zeigt ein Blockschaltbild einer Ausführungsform einer erfindungsgemäßen Ortungsvorrichtung 20, welche auf der Ortungsvorrichtung 1 der Fig. 1 basiert.

Die Ortungsvorrichtung 20 weist ebenso, wie die Ortungsvorrichtung 1 die Empfangsantenne 4 auf, die ein vorgegebenes Bewegungsmuster 5 ausführt und das empfangene Funksignal 3 ausgibt. Zwischen der Recheneinrichtung 21 und der Empfangsantenne 4 ist bei der Ortungsvorrichtung 20 die Auswerteeinrichtung 12 vorgesehen, die aus dem empfangenen Funksignal 3 Datensätze 13-1 bis 13-n erzeugt, die jeweils für einen Abtastzeitpunkt bzw. eine Richtung der Empfangsantenne 4 den Pegel des empfangenen Funksignals 3 kennzeichnen. Aus diesen Datensätzen 13-1 bis 13-n kann die Recheneinrichtung 21 z.B. einen Empfangsvektor aufbauen.

Die Recheneinrichtung 21 weist ein erstes Modul 24 zur Transformation der Datensätze 13-1 bis 13-n bzw. des Empfangsvektors in den Frequenzbereich auf. Ferner weist die Recheneinrichtung 21 ein zweites Modul zur Transformation des Referenzsignals 7, welches als Referenzvektor bereitsteht, in den Frequenzbereich auf. Die Module 24 und 25 können z.B. eine Fast-Fourier-Transformation durchführen und als Programmmodule in der Recheneinrichtung 21 ausgebildet sein. Da das Referenzsignal 7 für jeweils eine Empfangsantenne 4 und ein entsprechendes Bewegungsmuster 5 unveränderlich ist, kann das Referenzsignal 7 auch einmalig in den Zeitbereich transformiert und gespeichert werden.

Die Korrelation der zwei Vektoren wird im Frequenzbereich durch den Multiplikator 27 durchgeführt, der den transformierten Empfangsvektor mit dem transformierten Referenzvektor zu einem Ausgangsvektor multipliziert. Nach der Multiplikation wird der Ausgangsvektor durch ein Modul 26 zur inversen Fourier-Transformation, insbesondere einer inversen Fast-Fourier-Transformation, zurück in den Zeitbereich transformiert, wo er als Ausgangssignal 30 oder Ausgangssignalvektor 30 bereitsteht.

Ein weiteres Modul 29 dient der Suche des größten Wertes in dem Ausgangssignal 30 bzw. dem Ausgangssignalvektor 30. Dabei liefert das Modul 29 insbesondere die Ordinalzahl des größten Wertes in dem Ausgangssignalvektor 29. Diese wird durch den Multiplikator 28 mit der Winkelauflösung 31 des Ausgangssignalvektors 30 multipliziert, um die Richtung 22 zu bestimmen, aus welcher das Funksignal 3 auf die Empfangsantenne 4 trifft.

Diese Ausführungsform der Recheneinrichtung 21 ist insbesondere dann zu verwenden, wenn der Referenzvektor bzw. das Referenzsignal 7 sein Maximum an derjenigen Stelle aufweist, welche einem Antennenwinkel der Empfangsantenne 4 von 0° entspricht.

Weist der Referenzvektor bzw. das Referenzsignal 7 sein Maximum an einer anderen Stelle auf, kann in der Recheneinrichtung 21 ein Modul vorgesehen sein, welches eine Subtraktion der entsprechenden Ordinalzahl des Maximums des Referenzsignals 7 bzw. des Referenzvektors von der Ordinalzahl des Maximums in dem Ausgangssignal 30 bzw. dem Ausgangssignalvektor durchführt.

Alle in der obigen Beschreibung genannten Module, Multiplikatoren und weitere Funktionen der Recheneinrichtung 21 können als Programmmodule ausgebildet sein, die in einem Prozessor der Recheneinrichtung 21 ausgeführt werden. Alle oder einige der genannten Komponenten können aber z.B. auch in einem FPGA, CPLD oder ASIC implementiert sein.

Fig. 4 zeigt eine schematische Darstellung eines erfindungsgemäßen Referenzsignals 7.

Die Abszissenachse des Diagramms der Fig. 4 zeigt einerseits den Winkel der Empfangsantenne 4 von -180° bis 180° und gleichzeitig die Ordinalzahlen der Werte eines entsprechenden Ausgangssignalvektors von 1801 über 0 bis 1800, wobei der Wert 1801 dem Winkel von -180,1° entspricht und der Wert von 1800 dem Winkel von 180° entspricht. Die Ordinatenachse des Diagramms zeigt den Signalpegel. Da sie zur Erläuterung des Prinzips der Erfindung nicht relevant ist, ist der Signalpegel nicht mit einer Einheit versehen.

Das Referenzsignal 7 verläuft in etwa in Form einer Gaus-Glocke und weist ein Maximum bei 0° bzw. der Ordinalzahl 0 auf. Dies bedeutet, dass die Empfangsantenne 4 theoretisch den größten Pegel des Referenzsignals 7 empfängt, wenn sie in einem Winkel von 0° ausgerichtet ist.

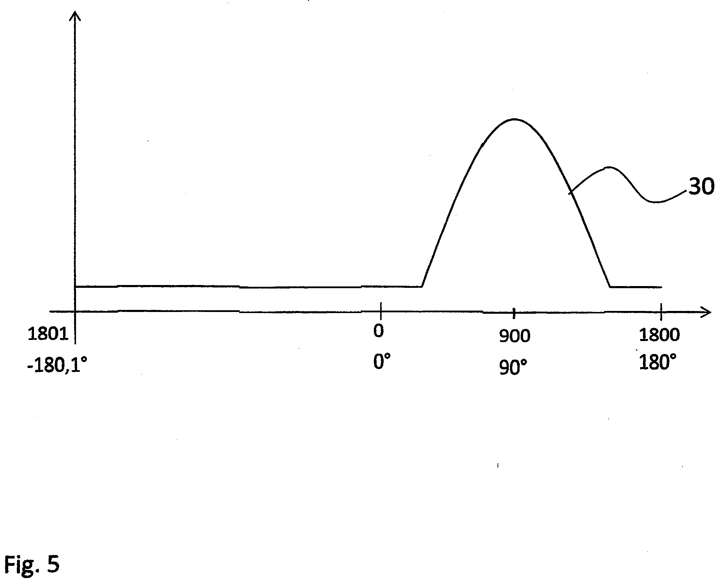

Fig. 5 zeigt eine schematische Darstellung eines Ausgangssignals 30 gemäß der vorliegenden Erfindung, wie es nach der Faltung des Referenzsignals 7 der Fig. 4 mit einem möglichen empfangenen Funksignal 3 entsteht, dessen maximaler Pegel bei einem Winkel der Empfangsantenne 4 von 90° empfangen wird. Die Achsen des Diagramms der Fig. 5 entsprechen dabei den Achsen des Diagramms der Fig. 4.

Die Faltung des empfangenen Funksignals 3 mit dem Referenzsignal 7 der Fig. 3 ergibt ein Ausgangssignal 30, welches sein Maximum ebenfalls für einen Winkel der Empfangsantenne von 90° bzw. für den Wert mit der Ordinalzahl 900 aufweist. Es kann also einfach durch die Multiplikation dieser Ordinalzahl von 90 mit der Winkelauflösung des Ausgangssignalvektors von 0,1° der Winkel berechnet werden, aus welchem das Signal auf die Empfangsantenne 4 eintrifft.

Durch die Faltung des empfangenen Funksignals 3 mit dem Referenzsignal 7 wird auch für Funksignale mit variierendem Signalpegel ein Ausgangssignal erzeugt, welches eindeutige Rückschlüsse auf die Richtung 22 zulässt, aus welcher das Funksignal 3 empfangen wird.

In einer Ausführungsform kann der Empfangsvektor z.B. auch über mehrere Bewegungszyklen der Empfangsantenne 3 aufgebaut werden. Dazu können die zu den einzelnen Abtastzeitpunkten empfangenen Signalpegel z.B. einfach in den jeweiligen Werten des Empfangsvektors aufsummiert werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne von der beanspruchten Erfindung abzuweichen.

Bezugszeichen

| | |
|---|---|
| 1, 20 | Ortungsvorrichtung |
| 2 | Quelle |
| 3 | Funksignal |
| 4 | Empfangsantenne |
| 5 | Bewegungsmuster |
| 6, 21 | Recheneinrichtung |
| 7 | Referenzsignal |
| 8, 22 | Richtung |
| | |
| 12 | Auswerteeinrichtung |
| 13-1 bis 13-n | Datensätze |

| | |
|---|---|
| 24, 25 | Modul zur Fourier-Transformation |
| 26 | Modul zur inversen Fourier-Transformation |
| 27, 28 | Multiplikator |
| 29 | Modul zur Suche des Maximums |
| 30 | Ausgangssignal |
| 31 | Winkelauflösung |
| | |
| S1 bis S4 | Verfahrensschritte |

**Patentansprüche**

1. Ortungsvorrichtung (1, 20) zur Ortung einer Quelle (2) eines Funksignals (3),
   mit einer beweglich gelagerten Empfangsantenne (4), welche eine Richtwirkung aufweist und ausgebildet ist, ein vorgegebenes Bewegungsmuster (5) auszuführen und dabei das Funksignal (3) zu empfangen,
   mit einer Recheneinrichtung (6, 21), welche ausgebildet ist, das empfangene Funksignal (3) mit einem vorgegebenen Referenzsignal (7) zu korrelieren und basierend auf einem Maximum des Korrelationsergebnisses die Richtung (8, 22) zu bestimmen, aus welcher das Funksignal (3) auf die Empfangsantenne (4) trifft,
   wobei das Referenzsignal (7) ein theoretisch von der bewegten Empfangsantenne (4) empfangenes Standardsignal mit konstantem Signalpegel nachbildet, welches auf die Empfangsantenne (4) aus einer unveränderlichen vorgegebenen Senderichtung trifft,
   wobei das Referenzsignal (7) als Referenzvektor ausgebildet ist, welcher eine vorgegebene Anzahl an Werten aufweist, wobei jeder der Werte für einen Abschnitt des Bewegungsmusters (5) den theoretischen Pegel des empfangenen Standardsignals angibt;
   **dadurch gekennzeichnet, dass**
   die Recheneinrichtung (6, 21) ausgebildet ist, das empfangene Funksignal (3) in einem Empfangsvektor zu speichern, welcher die gleiche Anzahl an Werten aufweist, wie der Referenzvektor, und
   die Recheneinrichtung (6, 21) ausgebildet ist, für jeden Abtastzeitpunkt des empfangenen Funksignals (3) den jeweiligen Abtastzeitpunkt durch die Dauer des Bewegungsmusters (5) zu dividieren und den Nachkommaanteil der Division mit der Anzahl der Werte des Empfangsvektors zu multiplizieren, um die Stelle des Wertes in dem Vektor zu berechnen, welchem ein Pegel des empfangenen Signals zum jeweiligen Abtastzeitpunkt zuzuordnen ist, und den Pegel des empfangenen Signals zum jeweiligen Abtastzeitpunkt zu dem entsprechenden Wert an der berechneten Stelle zu addieren.

2. Ortungsvorrichtung (1, 20) nach Anspruch 1, mit einer Auswerteeinrichtung (12), welche ausgebildet ist, aus dem empfangenen Funksignal (3) einen Datenstrom aus Datensätzen (13-1 bis 13-n) zu erzeugen, welche das empfangene Funksignal (3) beschreiben, wobei jeder Datensatz (13-1 bis 13-n) zumindest den jeweiligen Signalpegel und die Richtung angibt, in welche die Empfangsantenne (4) zum jeweiligen Abtastzeitpunkt ausgerichtet ist, wobei die Recheneinrichtung (6, 21) ausgebildet ist, den Pegel des empfangenen Funksignals (3) zum jeweiligen Abtastzeitpunkt zu dem entsprechenden Wert des Empfangsvektors zu addieren, welcher der in dem Datensatz (13-1 bis 13-n) angegebenen Richtung entspricht.

3. Ortungsvorrichtung (1, 20) nach einem der vorherigen Ansprüche, wobei die Recheneinrichtung (6, 21) ausgebildet ist, das empfangene Funksignal (3) und das Referenzsignal (7) periodisch im Zeitbereich zu einem Ausgangssignal (30) zu korrelieren.

4. Ortungsvorrichtung (1, 20) nach einem der vorherigen Ansprüche 1 bis 3, wobei die Recheneinrichtung (6, 21) ausgebildet ist, das empfangene Funksignal (3) und das Referenzsignal (7) jeweils in den Frequenzbereich zu transformieren, die transformierten Signale elementweise miteinander zu multiplizieren und das Ergebnis der Multiplikation als Ausgangssignal (30) zurück in den Zeitbereich zu transformieren.

5. Ortungsvorrichtung (1, 20) nach einem der vorherigen Ansprüche 3 oder 4, wobei die Recheneinrichtung (6, 21) ausgebildet ist, die Differenz der Position des Maximums in dem Ausgangssignal (30) und der Position des Maximums in dem Referenzsignal (7) zu bestimmen und basierend auf der bestimmten Differenz die Position der Quelle (2) des Funksignals (3) zu bestimmen.

6. Ortungsverfahren zum Orten einer Quelle (2) eines Funksignals (3), aufweisend die Schritte:

   Ausführen eines vorgegebenen Bewegungsmusters (5) mit einer beweglich gelagerten Empfangsantenne (4), welche eine Richtwirkung aufweist,
   Empfangen des Funksignals (3) mit der beweglich gelagerten Empfangsantenne (4) während diese das Bewegungsmuster (5) ausführt,
   Korrelieren des empfangenen Funksignals (3) mit einem vorgegebenen Referenzsignal (7), und
   Bestimmen der Richtung (8, 22), aus welcher das Funksignal (3) auf die Empfangsantenne (4) trifft, basierend auf einem Maximum des Korrelationsergebnisses,
   wobei das Referenzsignal (7) ein theoretisch von der bewegten Empfangsantenne (4) empfangenes Standardsignal mit konstantem Signalpegel nachbildet, welches auf die Empfangsantenne (4) aus einer unveränderlichen vorgegebenen Senderichtung trifft,
wobei das Referenzsignal (7) als Referenzvektor ausgebildet ist, welcher eine vorgegebene Anzahl an Werten aufweist, wobei jeder der Werte für einen Abschnitt des Bewegungsmusters (5) den theoretischen Pegel des empfangenen Standardsignals angibt,
**dadurch gekennzeichnet, dass**
das empfangene Funksignal (3) in einem Empfangsvektor gespeichert wird, welcher die gleiche Anzahl an Werten aufweist, wie der Referenzvektor, und
das für jeden Abtastzeitpunkt des empfangenen Funksignals (3) der jeweilige Abtastzeitpunkt durch die Dauer des Bewegungsmusters (5) dividiert wird und der Nachkommaanteil der Division mit der Anzahl der Werte des Empfangsvektors multipliziert wird, um die Stelle des Wertes in dem Vektor zu berechnen, welchem ein Pegel des empfangenen Signals zum jeweiligen Abtastzeitpunkt zuzuordnen ist, und der Pegel des empfangenen Signals zum jeweiligen Abtastzeitpunkt zu dem entsprechenden Wert an der berechneten Stelle addiert wird.

7. Ortungsverfahren nach Anspruch 6, wobei aus dem empfangenen Funksignal (3) ein Datenstrom aus Datensätzen (13-1 bis 13-n) erzeugt wird, welche das empfangene Funksignal (3) beschreiben, wobei jeder Datensatz (13-1 bis 13-n) zumindest den jeweiligen Signalpegel und die Richtung angibt, in welche die Empfangsantenne (4) zum jeweiligen Abtastzeitpunkt ausgerichtet ist, und wobei der Pegel des empfangenen Signals zum jeweiligen Abtastzeitpunkt zu dem entsprechenden Wert des Empfangsvektors addiert wird, welcher der in dem Datensatz (13-1 bis 13-n) angegebenen Richtung entspricht.

8. Ortungsverfahren nach einem der vorherigen Ansprüche 6 bis 7, wobei das empfangene Funksignal (3) und das Referenzsignal (7) periodisch im Zeitbereich zu einem Ausgangssignal (30) korreliert werden.

9. Ortungsverfahren nach einem der vorherigen Ansprüche 6 bis 7, wobei das empfangene Funksignal (3) und das Referenzsignal (7) jeweils in den Frequenzbereich transformiert werden, die transformierten Signale elementweise miteinander multipliziert werden und das Ergebnis der Multiplikation als Ausgangssignal (30) zurück in den Zeitbereich transformiert wird.

10. Ortungsverfahren nach einem der vorherigen Ansprüche 7 oder 8, wobei die Differenz der Position des Maximums in dem Ausgangssignal (30) und der Position des Maximums in dem Referenzsignal (7) bestimmt wird und basierend auf der bestimmten Differenz die Position der Quelle (2) des Funksignals (3) bestimmt wird.

**Claims**

1. Locating device (1, 20) for locating a source (2) of a radio signal (3),
   comprising a movably mounted receiving antenna (4), which has a directionality and is formed to perform a predetermined movement pattern (5) and in doing so to receive the radio signal (3),
   comprising a computation means (6, 21), which is formed to correlate the received radio signal (3) with a predetermined reference signal (7) and, on the basis of a maximum of the correlation result, to determine the direction (8, 22) from which the radio signal (3) is arriving at the receiving antenna (4),
   the reference signal (7) simulating a standard signal of a constant signal level which is theoretically received by the moving receiving antenna (4) and which arrives at the receiving antenna (4) from an invariable predetermined transmission direction,
   the reference signal (7) being formed as a reference vector which has a predetermined number of values, each of the values specifying the theoretical level of the received standard signal for a portion of the movement pattern (5); **characterised in that**
   the computation means (6, 21) is formed to store the received radio signal (3) in a receiving vector which has the same number of values as the reference vector, and
   the computation means (6, 21) being formed, for each sampling time point of the received radio signal (3), to divide the associated sampling time point by the duration of the movement pattern (5) and to multiply the non-integer part of the division by the number of values in the receiving vector so as to calculate the position of the value in the vector to which a level of the received signal at the associated sampling time point is to be assigned, and to add the level of the received signal at the associated sampling time point to the corresponding value at the calculated position.

2. Locating device (1, 20) according to claim 1, comprising an evaluation means (12) which is formed to generate from the received radio signal (3) a data stream of datasets (13-1 to 13-n) which describe the received radio signal (3), each dataset (13-1 to 13-n) specifying at least the associated signal level and the direction in which the receiving antenna (4) is orientated at the associated sampling time point, wherein the computation means (6, 21) is formed to add the level of the received radio signal (3) at the associated sampling time point to the corresponding value in the receiving vector which corresponds to the direction specified in the dataset (13-1 to 13-b).

3. Locating device (1, 20) according to either of the preceding claims, wherein the computation means (6, 21) is formed to correlate the received radio signal (3) and the reference signal (7) with an output signal (30) periodically in the time domain.

4. Locating device (1, 20) according to any of preceding claims 1 to 3, wherein the computation means (6, 21) is formed to transform the received radio signal (3) and the reference signal (7) each into the frequency domain, to multiply the transformed signals by one another element-wise, and to transform the result of the multiplication back into the time domain as an output signal (30).

5. Locating device (1, 20) according to either of preceding claims 3 and 4, wherein the computation device (6, 21) is formed to determine the difference between the position of the maximum in the output signal (30) and the position of the maximum in the reference signal (7) and to determine the position of the source (2) of the radio signal (3) on the basis of the determined difference.

6. Locating method for locating a source (2) of a radio signal (3), comprising the steps of:

   performing a predetermined pattern (5) with a movably mounted receiving antenna (4) which has a directionality,
   receiving the radio signal (3) with the movably mounted receiving antenna (4) while it is performing the movement pattern (5),
   correlating the received radio signal (3) with a predetermined reference signal (7), and
   determining the direction (8, 22) from which the radio signal (3) is arriving at the receiving antenna (4) on the basis of a maximum of the correlation result,
   the reference signal (7) simulating a standard signal of a constant signal level which is theoretically received by the moving receiving antenna (4) and which arrives at the receiving antenna (4) from an invariable predetermined transmission direction,
   the reference signal (7) being formed as a reference vector which has a predetermined number of values, each of the values specifying the theoretical level of the received standard signal for a portion of the movement pattern (5);
   **characterised in that**
   the received radio signal (3) is stored in a receiving vector which has the same number of values as the reference vector, and,

for each sampling time point of the received radio signal (3), the associated sampling time point is divided by the duration of the movement pattern (5) and the non-integer part of the division is multiplied by the number of values in the receiving vector so as to calculate the position of the value in the vector to which a level of the received signal at the associated sampling time point is to be assigned, and the level of the received signal at the associated sampling time point is added to the corresponding value at the calculated position.

7. Locating method according to claim 6, wherein, from the received radio signal (3), a data stream of datasets (13-1 to 13-n) which describe the received radio signal (3) is generated, each dataset (13-1 to 13-n) specifying at least the associated signal level and the direction in which the receiving antenna (4) is orientated at the associated sampling time point, the level of the received radio signal at the associated sampling time point being added to the corresponding value in the receiving vector which corresponds to the direction specified in the dataset (13-1 to 13-b).

8. Locating method according to either of preceding claims 6 and 7, wherein the received radio signal (3) and the reference signal (7) are correlated with an output signal (30) periodically in the time domain.

9. Locating method according to either of preceding claims 6 and 7, wherein the received radio signal (3) and the reference signal (7) are each transformed into the frequency domain, the transformed signals are multiplied by one another element-wise, and the result of the multiplication is transformed back into the time domain as an output signal (30) .

10. Locating method according to either of preceding claims 7 and 8, wherein the difference between the position of the maximum in the output signal (30) and the position of the maximum in the reference signal (7) is determined and the position of the source (2) of the radio signal (3) is determined on the basis of the determined difference.

**Revendications**

1. Dispositif de localisation (1, 20) pour localiser une source (2) d'un signal radio (3),
comportant une antenne de réception (4) montée de manière mobile, qui présente un effet directionnel et est conçue pour exécuter un motif de mouvement (5) prédéfini et recevoir en même temps le signal radio (3),
comportant un moyen de calcul (6, 21) qui est conçu pour corréler le signal radio reçu (3) avec un signal de référence prédéfini (7) et pour déterminer, sur la base d'un maximum du résultat de corrélation, la direction (8, 22) depuis laquelle le signal radio (3) atteint l'antenne de réception (4),
dans lequel le signal de référence (7) simule un signal standard ayant un niveau de signal constant théoriquement reçu par l'antenne de réception mobile (4), qui atteint l'antenne de réception (4) depuis une direction d'émission prédéfinie invariable,
dans lequel le signal de référence (7) est réalisé sous la forme d'un vecteur de référence qui présente un nombre prédéfini de valeurs, chacune des valeurs pour une partie du motif de mouvement (5) indiquant le niveau théorique du signal standard reçu ;
**caractérisé en ce que**
le moyen de calcul (6, 21) est conçu pour stocker le signal radio reçu (3) dans un vecteur de réception qui présente le même nombre de valeurs que le vecteur de référence, et
le moyen de calcul (6, 21) est conçu pour diviser, pour chaque instant d'échantillonnage du signal radio reçu (3), l'instant d'échantillonnage respectif par la durée du motif de mouvement (5) et pour multiplier la partie fractionnaire de la division par le nombre de valeurs du vecteur de réception pour calculer la place de la valeur dans le vecteur auquel un niveau du signal reçu doit être associé à l'instant d'échantillonnage respectif, et pour ajouter le niveau du signal reçu à l'instant d'échantillonnage respectif à la valeur correspondante à la place calculée.

2. Dispositif de localisation (1, 20) selon la revendication 1, comportant un dispositif d'évaluation (12) qui est conçu pour générer à partir du signal radio reçu (3) un flux de données formé de jeux de données (13-1 à 13-n) qui décrivent le signal radio reçu (3), chaque jeu de données (13-1 à 13-n) indiquant au moins le niveau de signal respectif et la direction dans laquelle l'antenne de réception (4) est orientée à l'instant d'échantillonnage respectif,
dans lequel le moyen de calcul (6, 21) est conçu pour ajouter le niveau du signal radio reçu (3) à l'instant d'échantillonnage respectif à la valeur correspondante du vecteur de réception qui correspond à la direction indiquée dans le jeu de données (13-1 à 13-n).

3. Dispositif de localisation (1, 20) selon l'une des revendications précédentes, dans lequel le moyen de calcul (6, 21) est conçu pour corréler périodiquement dans le domaine temporel le signal radio reçu (3) et le signal de référence (7) à un signal de sortie (30).

4. Dispositif de localisation (1, 20) selon l'une des revendications 1 à 3 précédentes, dans lequel le moyen de calcul (6, 21) est conçu pour transformer respectivement le signal radio reçu (3) et le signal de référence (7) dans le domaine fréquentiel, pour multiplier les signaux transformés entre eux élément par élément et pour retransformer le résultat de la multiplication dans le domaine temporel en tant que signal de sortie (30).

5. Dispositif de localisation (1, 20) selon l'une des revendications 3 ou 4 précédentes, dans lequel le moyen de calcul (6, 21) est conçu pour déterminer la différence entre la position du maximum dans le signal de sortie (30) et la position du maximum dans le signal de référence (7) et pour déterminer la position de la source (2) du signal radio (3) sur la base de la différence déterminée.

6. Procédé de localisation pour localiser une source (2) d'un signal radio (3), présentant les étapes consistant à :

exécuter un motif de mouvement prédéfini (5) avec une antenne de réception (4) montée de manière mobile qui présente un effet directionnel,

recevoir le signal radio (3) avec l'antenne de réception (4) montée de manière mobile pendant que cette dernière exécute le motif de mouvement (5),

corréler le signal radio reçu (3) avec un signal de référence prédéfini (7), et

déterminer la direction (8, 22) depuis laquelle le signal radio (3) atteint l'antenne de réception (4) sur la base d'un maximum du résultat de corrélation,

dans lequel le signal de référence (7) simule un signal standard ayant un niveau de signal constant théoriquement reçu par l'antenne de réception mobile (4), qui atteint l'antenne de réception (4) depuis une direction d'émission prédéfinie invariable,

dans lequel le signal de référence (7) est réalisé sous la forme d'un vecteur de référence qui présente un nombre prédéfini de valeurs, chacune des valeurs pour une partie du motif de mouvement (5) indiquant le niveau théorique du signal standard reçu ;

**caractérisé en ce que**

le signal radio reçu (3) est stocké dans un vecteur de réception qui présente le même nombre de valeurs que le vecteur de référence ; et

que, pour chaque instant d'échantillonnage du signal radio reçu (3), l'instant d'échantillonnage respectif est divisé par la durée du motif de mouvement (5) et la partie fractionnaire de la division est multipliée par le nombre de valeurs du vecteur de réception pour calculer la place de la valeur dans le vecteur auquel un niveau du signal reçu doit être associé à l'instant d'échantillonnage respectif, et le niveau du signal reçu à l'instant d'échantillonnage respectif est ajouté à la valeur correspondante à la place calculée.

7. Procédé de localisation selon la revendication 6, dans lequel un flux de données formé de jeux de données (13-1 à 13-n) qui décrivent le signal radio reçu (3) est généré à partir du signal radio reçu (3), chaque jeu de données (13-1 à 13-n) indiquant au moins le niveau de signal respectif et la direction dans laquelle l'antenne de réception (4) est orientée à l'instant d'échantillonnage respectif, et

dans lequel le niveau du signal reçu à l'instant d'échantillonnage respectif est ajouté à la valeur correspondante du vecteur de réception qui correspond à la direction indiquée dans le jeu de données (13-1 à 13-n).

8. Procédé de localisation selon l'une des revendications 6 à 7 précédentes, dans lequel le signal radio reçu (3) et le signal de référence (7) sont corrélés périodiquement dans le domaine temporel à un signal de sortie (30).

9. Procédé de localisation selon l'une des revendications 6 à 7 précédentes, dans lequel le signal radio reçu (3) et le signal de référence (7) sont respectivement transformés dans le domaine fréquentiel, les signaux transformés sont multipliés entre eux élément par élément et le résultat de la multiplication est retransformé dans le domaine temporel en tant que signal de sortie (30).

10. Procédé de localisation selon l'une des revendications 7 ou 8 précédentes, dans lequel la différence entre la position du maximum dans le signal de sortie (30) et la position du maximum dans le signal de référence (7) est déterminée et la position de la source (2) du signal radio (3) est déterminée sur la base de la différence déterminée.

EP 3 121 616 B1

**Fig. 1**

Fig. 2

Fig. 3

Fig. 4

EP 3 121 616 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2101829 A